# EUROPEAN PATENT SPECIFICATION

(11) **EP 0 457 975 B1**
(45) Date of publication and mention of the grant of the patent: **05.04.1995**
(21) Application number: 90305135.7
(22) Date of filing: 11.05.1990
(51) Int. Cl.: C25F 3/16, C25F 3/14, B23H 9/02, B23H 3/00

(54) **Electrochemical machining of microholes**
Elektrochemisches Bearbeiten von sehr kleinen Löchern
Usinage électrochimique de trous très étroits

(30) Priority: 13.05.1989 GB 8911036
(43) Date of publication of application: 27.11.1991
(73) Proprietor: AMCHEM COMPANY LIMITED, Sileby Leicestershire LE12 7RZ (GB)
(72) Inventor: Baker, George Edward, Leire, Leicestershire LE17 5HL (GB)
(74) Representative: Spoor, Brian

(56) References cited:
- GB-A- 1 164 536
- US-A- 3 705 843
- US-A- 4 578 164

## Description

This invention relates to electrochemical machining of microholes.

Microholes are used in applications such as the fuel injectors of compression ignition or 'diesel' engines. In such applications, it may be necessary to control the flow of fluid through the microhole to very considerable accuracy, for example to control flow rate within one per cent. Microholes can be made by electro discharge machining (EDM) to very considerable accuracy.

However, where such microholes are used as injector nozzles in fuel injection systems of diesel engines, the expected lifetime of the injector may be of the order 500,000 miles of vehicle travel. During this prolonged period of use, the injector may be subjected to erosion by the fuel passing through it. This erosion takes place at the entry to the microhole and may cause an increase in the flow of fuel through the microhole so that the correct injection rate is not achieved or maintained.

It would be desirable to produce a stable arcuate entry taper at the inlet of the microhole which remains stable throughout the working life of the injector to produce an accurate flow through the nozzle.

It is known from US-A-4 578 164 to de-burr spray holes using an insulated electrode. However the electrode is not placed into the bore at any stage.

GB-A-1 164 536 also relates to de-burring or chamfering a preformed hole. A pressurised flow of electrolyte is established against the surface of the workpiece lying within the working zone and an electrode having an insulating plug is mounted in the hole or cavity so that the insulating plug fills the hole.

US-A- 3 705 843 also uses an electrode to de-burr apertures without the electrode passing into the aperture.

It is an object of the present invention to provide an arcuate tapered entry to a microhole.

According to the invention there is provided a method of electrochemically machining an arcuate taper at an end of a microhole, the method comprising taking a workpiece having said microhole, inserting a conductive rod in the microhole the rod having an insulating sleeve except in the region of said end of the microhole, feeding an electrolyte through said microhole, electrically connecting the workpiece and rod as respective electrodes, metering the flow rate of electrolyte through the microhole, and controlling the electrical supply to the electrodes in response to the electrolyte flow rate.

The electrical supply may be controlled by altering the magnitude of the current supplied. Alternatively or in addition, the period of electrical supply may be altered.

Preferably, the electrolyte is supplied to the microhole by pump means from an electrolyte supply to which it is returned after being pumped through the microhole. The electrolyte supply may comprise plant controlling the temperature, conductivity and purity of the electrolyte.

The flow rate of electrolyte through the microhole may be metered with the conductive rod electrode in position or alternatively with the rod electrode removed.

The electrochemical machining method may be carried out on a plurality of microholes simultaneously by providing each with a conductive rod electrode and electrolyte supply and by metering the electrolyte flow rate through said plurality of microholes.

Viewed from a further aspect, the invention provides an apparatus for carrying out the method set out above, according to claim 9.

The invention will now be described in more detail by way of example only with reference to the accompanying drawings in which:-
- Figure 1: is a schematic diagram of an electrochemical machining plant, and
- Figure 2: is an enlarged schematic view of an electrode arrangement.

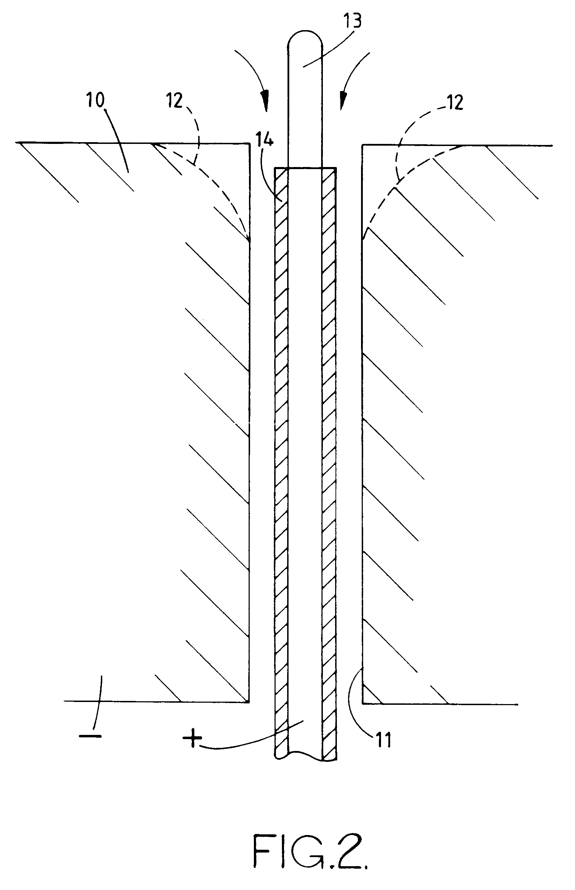

Referring firstly to Figure 2 of the drawings, a workpiece 10 has a previously machined microhole 11 made by electro discharge machining and typically having a diameter of between 0.1 and 0.5mm.

The microhole is of approximately constant diameter throughout and it is desired to make a "radiused" end. That is an end having an arcuate taper as shown in dotted lines at 12.

Where the microhole is to be used as an injection nozzle for a diesel engine, this will avoid or reduce problems due to erosion of the entry end of the microhole during the working life of the nozzle.

In order to machine the arcuate taper 12 by electrochemical machining, a conductive rod electrode 13 is inserted through the microhole. The rod 13 has a sheath 14 which is of insulating material.

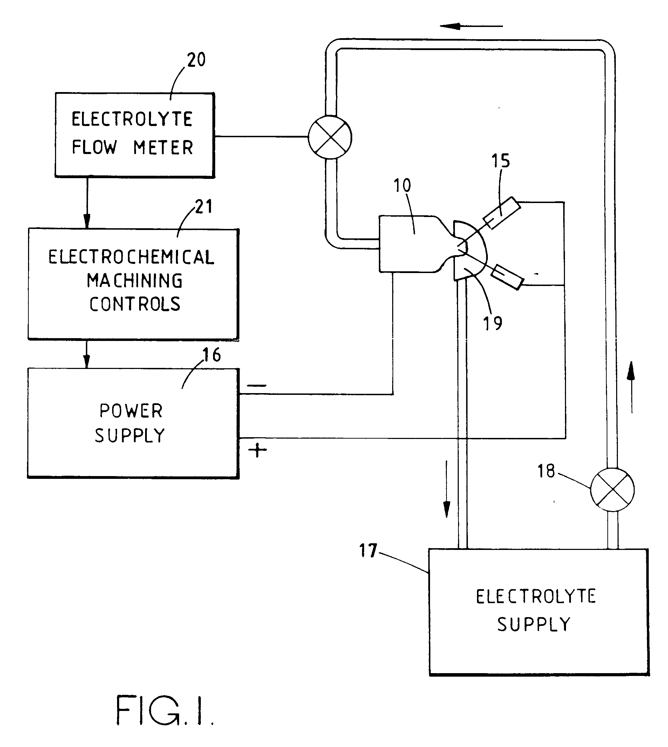

Turning to Figure 1 of the drawings, the workpiece is again shown at 10. Electrode holders 15 are provided for one or more rod electrodes 13 and are electrically connected to a power supply 16. The workpiece 10 is itself connected to the other terminal of the power supply so as to act as an electrode.

In the presence of an electrolyte, a current passes between the work piece 11 and the unsleeved portion of the rod electrode 13, so that the arcuate taper 12 is formed at the entry opening of the microhole 11.

The electrolyte is supplied from a supply 17 through a pump 18 and suitable pipe. It is fed through the microhole 11 in the direction shown by the arrows.

The electrolyte supply 17 includes means for filtering or purifying the electrolyte, and controlling its temperature and conductivity. The supply of the electrolyte through the pump 18 forces it through the workpiece microhole and it is then collected in a manifold 19 and returned to the electrolyte supply 17.

The flow rate of electrolyte is metered by an electrolyte flow meter 20. This may be done either continuously during electrochemical machining, that is without the removal of rod electrode 13, or periodically when the electrode 13 has been removed.

In either case, the rate of flow of electrolyte generates a control signal to an electrochemical machining control 21, which in turn provides a power controlling signal to the power supply 16 previously referred to.

Initially, the flow of electrolyte is relatively low since the arcuate entry port 12 has not yet been formed and the microhole is of constant diameter throughout. As electrochemical machining proceeds, the gradual removal of metal at the arcuate entry portion 12 increases the flow rate through the microhole. This increase is detected by the flow meter 20, and the control means 21 adjust the current supplied by the power supply 16 to the electrodes. Alternatively, the machining control means can be used simply to cut off the power supply when a suitable flow rate has been reached.

The apparatus and method rely on the use of a closed loop feedback in that the electrolyte flow rate is controlled by the amount of metal removed at 12 and, in turn, controls the rate of metal removal.
Although, for convenience, the apparatus and method have been described in the relation to the electrochemical machining of an arcuate entry portion or radius on a single microhole, the principle can be extended to nozzles for example having a plurality of microholes fed with electrolyte from a common source and each having a suitable rod electrode to produce a respective arcuate entry on each microhole.

## Claims

1. A method of electrochemically machining an arcuate taper at an end of a microhole, characterised in that the method comprises the steps:
taking a workpiece (10) having said microhole (11);
inserting a conductive rod (13) in the microhole, the rod having an insulating sleeve (14) except in the region of said end of the microhole (11);
feeding an electrolyte through said microhole;
electrically connecting the workpiece (10) and rod (13) as respective electrodes;
metering the flow rate of electrolyte through the microhole;
and controlling the electrical supply to the electrodes in response to the electrolyte flow rate.

2. A method according to claim 1 further characterised in that the electrical supply is controlled by altering the magnitude of the current supplied.

3. A method according to claim 1 further characterised in that the period of electrical supply is controlled.

4. A method according to claim 1 further characterised in that the electrolyte is supplied to the microhole (11) by pumping from electrolyte supply means (17) through the microhole (11) and is then returned to said electrolyte supply means (17).

5. A method according to claim 4 further characterised in that the temperature, conductivity and purity of the electrolyte are controlled at the said electrolyte supply means (17).

6. A method according to any one of the preceding claims further characterised in that the flow rate of electrolyte through the microhole (11) is metered with the conductive rod electrode (13) in position.

7. A method according to any one of claims 1-5 further characterised in that the flow rate of electrolyte through the microhole is metered with the conductive rod electrode (13) removed.

8. A method according to claim 1 further characterised in that said workpiece has a plurality of microholes (11) and a corresponding plurality of conductive rod electrodes (13) are provided in said microholes, and wherein the step of feeding said electrolyte through said microhole comprises the step of feeding said electrolyte through all of said plurality of microholes, and the step of metering the electrolyte flow rate comprises the step of metering the electrolyte flow rate through all of said plurality of microholes collectively.

9. Apparatus for carrying out the method of claim 1, characterised in that the apparatus comprises a conductive rod (13) adapted to be inserted into the microhole (11), the rod (13) having an insulating sleeve (14) except at one end, electrolyte feed means (17, 18, 20), power source (16), electrical connecting means (15), flow metering means (20) and electrical supply control means (21) adapted to control the electrical supply of the power means (16) to the electrodes (15) in response to the electrolyte flow detected in said flow metering means (20).

10. Apparatus according to claim 9 further characterised in that electrolyte supply means are provided including pump means (18) for supplying electrolyte through said microhole and returning it to said electrolyte supply means (17), the supply means further comprising plant controlling the temperature, conductivity and purity of the electrolyte.

## Patentansprüche

1. Verfahren zum elektrochemischen Bearbeiten eines bogenförmigen Konus an einem Ende eines Mikrolochs, dadurch gekennzeichnet, daß das Verfahren die folgenden Schritte aufweist:
Ergreifen eines Werkstücks (10), das das Mikroloch (11) hat;
Einsetzen eines leitenden Stabes (13) in das Mikroloch, wobei der Stab außer in dem Gebiet des Endes des Mikrolochs (11) eine isolierende Hülse (14) hat;
Zuführen eines Elektrolyten durch das Mikroloch;
elektrisches Anschließen des Werkstücks (10) und des Stabes (13) als Elektroden;
Messen der Strömungsrate des Elektrolyten durch das Mikroloch;
und Steuern der elektrischen Versorgung der Elektroden entsprechend der Elektrolyt-Strömungsrate.

2. Verfahren gemäß Anspruch 1, weiterhin dadurch gekennzeichnet, daß die elektrische Versorgung durch Verändern der Größe des zugeführten Stroms gesteuert wird.

3. Verfahren gemäß Anspruch 1, weiterhin dadurch gekennzeichnet, daß die Periode der elektrischen Versorgung gesteuert wird.

4. Verfahren gemäß Anspruch 1, weiterhin dadurch gekennzeichnet, daß der Elektrolyt dem Mikroloch (11) durch Pumpen von dem Elektrolyt-Zuführungsmittel (17) durch das Mikroloch (11) zugeführt wird, und dann zu dem Elektrolyt-Zuführungsmittel (17) zurückgeführt wird.

5. Verfahren gemäß Anspruch 4, weiterhin dadurch gekennzeichnet, daß die Temperatur, die Leitfähigkeit und die Reinheit des Elektrolyten bei dem Elektrolyt-Zuführungsmittel (17) gesteuert werden.

6. Verfahren gemäß irgendeinem der vorhergehenden Ansprüche, weiterhin dadurch gekennzeichnet, daß die Strömungsrate des Elektrolyten durch das Mikroloch (11) gemessen wird, wenn die leitende Stabelektrode (13) in ihrer Position ist.

7. Verfahren gemäß irgendeinem der Ansprüche 1-5, weiterhin dadurch gekennzeichnet, daß die Strömungsrate des Elektrolyten durch das Mikroloch gemessen wird wenn die leitende Stabelektrode (13) herausgenommen ist.

8. Verfahren gemäß Anspruch 1, weiterhin dadurch gekennzeichnet, daß das Werkstück eine Vielzahl von Mikrolöchern (11) hat, und eine entsprechende Vielzahl von leitenden Stabelektroden (13) in diesen Mikrolöchern vorgesehen ist, und wobei der Schritt des Zuführens des Elektrolyten durch das Mikroloch den Schritt des Zuführens des Elektrolyten durch alle Mikrolöcher der Vielzahl von Mikrolöchern aufweist, und der Schritt des Messens der Elektrolyt-Strömungsrate den Schritt des kollektiven Messens der Elektrolyt-Strömungsrate durch alle Mikrolöcher der Vielzahl von Mikrolöchern aufweist.

9. Vorrichtung zum Ausführen des Verfahrens des Anspruchs 1, dadurch gekennzeichnet, daß die Vorrichtung aufweist: einen leitenden Stab (13), der für die Einsetzung in das Mikroloch (11) ausgelegt ist, wobei der Stab (13) außer an einem Ende eine isolierende Hülse (14) hat, Elektrolyt-Zuführungsmittel (17, 18, 20), Stromversorgungsmittel (16), elektrische Anschlußmittel (15), Strömungsmeßmittel (20), und Steuermittel (21), die für die Steuerung der elektrischen Zuführung der Stromversorgungsmittel (16) zu den Elektroden (15) entsprechend der in den Strömungsmeßmitteln (20) gemessenen Elektrolytströmung ausgelegt sind.

10. Vorrichtung gemäß Anspruch 9, weiterhin dadurch gekennzeichnet, daß Elektrolyt-Zuführungsmittel vorgesehen sind, die Pumpenmittel (18) zum Zuführen des Elektrolyten durch das Mikroloch und zum Rückführen des Elektrolyten nach den Elektrolyt-Zuführungsmitteln (17) umfassen, wobei die Elektrolyt-Zuführungsmittel weiterhin eine Ausrüstung aufweisen, die die Temperatur, die Leitfähigkeit und die Reinheit des Elektrolyten steuert.

## Revendications

1. Procédé d'usinage électrochimique d'un effilement arqué au niveau de l'extrémité d'un microtrou, caractérisé en ce que le procédé comprend les étapes ci-dessous:
fourniture d'une pièce d'oeuvre (10) comportant ledit microtrou (11);
insertion d'une tige conductrice (13) dans le microtrou, la tige possédant une gaine isolante (14), sauf dans la région de ladite extrémité du microtrou (11);
alimentation d'un électrolyte à travers ledit microtrou;
connexion électrique de la pièce d'oeuvre (10) et de la tige (13) comme électrodes respectives;
mesure de la vitesse d' écoulement de l'électrolyte à travers le microtrou;
et réglage de l'alimentation électrique des électrodes en réponse à la vitesse d'écoulement de l'électrolyte.

2. Procédé selon la revendication 1, caractérisé en outre en ce que l'alimentation électrique est réglée par modification de l'intensité du courant d'alimentation.

3. Procédé selon la revendication 1, caractérisé en outre en ce que la période de l'alimentation électrique est réglée.

4. Procédé selon la revendication 1, caractérisé en outre en ce que l'électrolyte est amené au microtrou (11) par pompage à partir du moyen d'alimentation de l'électrolyte (17) à travers le microtrou (11) avant d'être ramené vers ledit moyen d'alimentation de l'électrolyte (17).

5. Procédé sel on la revendication 4, caractérisé en outre en ce que la température, la conductivité et la pureté de l'électrolyte sont réglées au niveau du dit moyen d'alimentation de l'électrolyte (17).

6. Procédé selon l'une quelconque des revendications précédentes, caractérisé en outre en ce que la vitesse d'écoulement de l'électrolyte à travers le microtrou (11) est mesurée pendant que l'électrode à tige conductrice (13) se trouve en position.

7. Procédé selon l'une quelconque des revendications 1 à 5, caractérisé en outre en ce que la vitesse d'écoulement de l'électrolyte à travers le microtrou est mesurée pendant que l'électrode à tige conductrice (13) est enlevée.

8. Procédé selon la revendication 1, caractérisé en outre en ce que ladite pièce d'oeuvre possède plusieurs microtrous (11), plusieurs électrodes à tige conductrice correspondantes (13) étant agencées dans lesdits microtrous, et dans lequel l'étape d'alimentation du dit électrolyte à travers ledit microtrou comprend l'étape d'alimentation du dit électrolyte à travers l'ensemble des dits plusieurs microtrous, l'étape de mesure de la vitesse d'écoulement de l'électrolyte comprenant l'étape de mesure collective de la vitesse d'écoulement de l'électrolyte à travers l'ensemble des dits plusieurs microtrous.

9. Appareil pour l'exécution du procédé selon la revendication 1, caractérisé en ce que l'appareil comprend une tige conductrice (13) destinée à être insérée dans le microtrou (11), la tige (13) possédant une gaine isolante (14), sauf au niveau d'une extrémité, des moyens d'alimentation de l'électrolyte (17, 18, 20), un moyen d'alimentation en courant (16), des moyens de connexion électrique (15), un moyen de mesure du débit (20) et un moyen de réglage de l'alimentation électrique (21), destiné à régler l'alimentation électrique du moyen d'alimentation en courant (16) des électrodes (15) en réponse au débit de l'électrolyte détecté dans ledit moyen de mesure du débit (20).

10. Appareil selon la revendication 9, caractérisé en outre en ce qu'il comprend des moyens d'alimentation de l'électrolyte, englobant un moyen de pompe (18) pour amener l'électrolyte à travers lesdits microtrous et le ramener vers lesdits moyens d'alimentation de l'électrolyte (17), les moyens d'alimentation comprenant en outre une installation de réglage de la température, de la conductivité et de la pureté de l'électrolyte.
